(19) Europäisches Patentamt
European Patent Office
Office européen des brevets

(11) **EP 2 031 253 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(51) Int Cl.:
*F04D 29/10* (2006.01)    *F16J 15/32* (2006.01)

(21) Anmeldenummer: **08162536.0**

(22) Anmeldetag: **18.08.2008**

(54) **Dichtung zur umfänglichen Spaltabdichtung**

Seal for circumferential gap sealing

Joint d'étanchéité pour fentes circonférentielles

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.08.2007 DE 202007012026 U**

(43) Veröffentlichungstag der Anmeldung:
**04.03.2009 Patentblatt 2009/10**

(73) Patentinhaber: **ebm-papst Mulfingen GmbH & Co. KG**
**74673 Mulfingen (DE)**

(72) Erfinder:
• **Heli, Thomas**
**74595 Langenburg (DE)**
• **Hofmann, Erich**
**74673 Mulfingen (DE)**
• **Rückert, Christian**
**97922 Lauda-Königshofen (DE)**

(74) Vertreter: **Patentanwälte**
**Dr. Solf & Zapf**
**Candidplatz 15**
**81543 München (DE)**

(56) Entgegenhaltungen:
WO-A-96/02777    CA-A1- 2 249 916
US-A- 2 264 413    US-A- 3 492 010
US-A- 4 739 998

**Beschreibung**

Die vorliegende Erfindung betrifft eine Dichtung zum Abdichten eines zwischen einer Welle und einer von dieser durchlaufenen Durchführöffnung einer Wandung bestehenden umfänglichen Öffnungsspaltes, mit einem Dichtelement aus nicht elastomerem Material und einem Spannelement zum kraftschlüssigen Fixieren des Dichtelements zwischen dem Spannelement und der Wandung, wobei das Dichtelement eine Durchgangsöffnung und das Spannelement eine Durchtrittsöffnung für die Welle besitzen.

Eine derartige Dichtung ist aus dem deutschen Gebrauchsmuster G 9111745.3 bekannt. Aus der Druckschrift US 4,739,998, die als nächstliegender Stand der Technik angesehen wird, ist eine weitere Wellendichtung bekannt, die an ihrem Dichtelement mehrere durch Rillen getrennte konzentrische, radial abgestufte Kontaktoberflächen aufweist, welche die Welle längs elliptischer Kontaktbänder abdichten, wobei jedes Kontaktband sowohl eine statische als auch eine dynamische Dichtfunktion aufweist. In der Druckschrift US 3,492,010 ist eine Dichtung beschrieben, bei der ein Dichtelement mit einer konischen Stirnfläche axial gegen eine konische Anlagefläche eines in dem Wellengehäuse eingeschobenen Topfeinsatzes gedrückt wird, wobei das Dichtelement die zu dichtende Welle durch die radial auftretenden Kräfte der gegeneinander gedrückten konischen Flächen umschließt und abdichtet. Die Druckschrift CA 2,249,916 beschreibt eine aus zwei verschiedenen Materialien bestehende Wellendichtung, die aus einem aus elastomerem Material bestehenden Gelenkteil und einem an dem Gelenkteil befestigtem Dichtelement aus PTFF besteht. In der Druckschrift WO 96102777 ist eine bidirektionale hydrodynamische Wellendichtung beschrieben, die aus einer ringförmigen Kunststoffscheibe aus PTFE besteht, wobei die Scheibe Rillen aufweist, die um die Welle herum verlaufen. Eine weitere Wellendichtung ist aus der Druckschrift US 2,264,413 bekannt, bei der ein elastisches Dichtelement mit einem kegelstumpfförmigen starren Ring partiell verbunden ist und auf eine Welle aufgeschoben und der starre Ring in einer abzudichtenden Öffnung mittels Schrauben befestigt wird.

Der vorliegenden Erfindung liegt die Aufgabe zu Grunde, ausgehend von einer gattungsgemäßen Dichtung diese derart zu verbessern, dass bei einem exzentrischen Verlauf der Welle und/oder bei Fluchtungsfehlern derselben sowie bei sehr hohen Temperaturen eine sichere Abdichtung der Welle zur Wandung erreicht wird.

Erfindungsgemäß wird dies dadurch erreicht, dass das Spannelement aus einem inneren Ringbereich mit der Durchtrittsöffnung besteht, der unter einem spitzen Winkel $\alpha$ schräg zur Mittelachse der Durchtrittsöffnung verläuft sowie aus einem äußeren Ringabschnitt, der gegenüber dem inneren Ringbereich abgewinkelt ist und mit einer zur Mittelachse parallel verlaufenden Linie einen spitzen Winkel $\beta$ einschließt, der kleiner ist als der Winkel $\alpha$ und das Dichtelement flanschförmig ausgebildet ist und einen mittleren Konuskörper aufweist, mit der sich konisch verengenden Durchgangsöffnung, die eine Eintrittsöffnung und eine Austrittsöffnung aufweist, wobei die Eintrittsöffnung einen Durchmesser besitzt, der größer als der Durchmesser der Welle ist und die Austrittsöffnung einen Durchmesser aufweist, der dem Durchmesser der Welle entspricht, wobei zwischen der Welle und dem Dichtelement im Bereich der Austrittsöffnung eine Umfangsdichtung ausgebildet ist. Erfindungsgemäß wird die Welle innerhalb der Dichtung schwimmend geführt, d. h., die Dichtung ist nicht, wie im Stand der Technik der eingangs genannten Art auf der Welle form- und/oder kraftschlüssig befestigt, sondern die Welle wird innerhalb der Dichtung drehbar gelagert. Somit sitzt erfindungsgemäß die Dichtung bei der Montage konzentrisch auf der Welle und Exzentrizitäten und Fluchtungsfehler werden erfindungsgemäß dadurch ausgeglichen, dass die Dichtung gegenüber der Wandung mittels des Spannelementes nach der Montage der Dichtung auf der Welle fixiert wird. Hierbei sind das Dichtelement und das Spannelement derart dimensioniert, dass stets eine umfangsgemäße Abdichtung der Durchführöffnung sicher gewährleistet ist. Indem erfindungsgemäß das Dichtelement aus einem nicht elastomeren Material, insbesondere Polytetrafluorethylen hergestellt ist, können mit der erfindungsgemäßen Dichtung Medien bei höchsten Temperaturen abgedichtet werden, ohne dass die Abdichtung der Welle gegenüber der Wandung beeinträchtigt wird.

Weitere vorteilhafte Ausführungen der Erfindung sind in den Unteransprüchen enthalten.

An Hand des in den beiliegenden Zeichnungen dargestellten Ausführungsbeispiels wird die Erfindung näher erläutert. Es zeigen:

Fig. 1     eine Seitenansicht eines Gebläses, zum Teil geschnitten, mit einer erfindungsgemäßen Dichtung,

Fig. 2a    eine Detailansicht des Ausschnittes II in Fig. 1, jedoch vor dem Montieren der erfindungsgemäßen Dichtung und

Fig. 2b    eine Detailansicht des Ausschnittes III in Fig. 2a,

Fig. 3     eine Detallansicht des Ausschnittes II in Fig. 1,

Fig. 4     eine Detailansicht des Ausschnittes II in Fig. 1, mit exzentrischem Verlauf der Welle, vor der Montage der erfindungsgemäßen Dichtung,

Fig. 5     eine Detailansicht des Ausschnittes II in Fig. 1 mit exzentrischem Verlauf der Welle.

In den einzelnen Figuren sind gleiche Teile stets mit denselben Bezugsziffern gekennzeichnet.

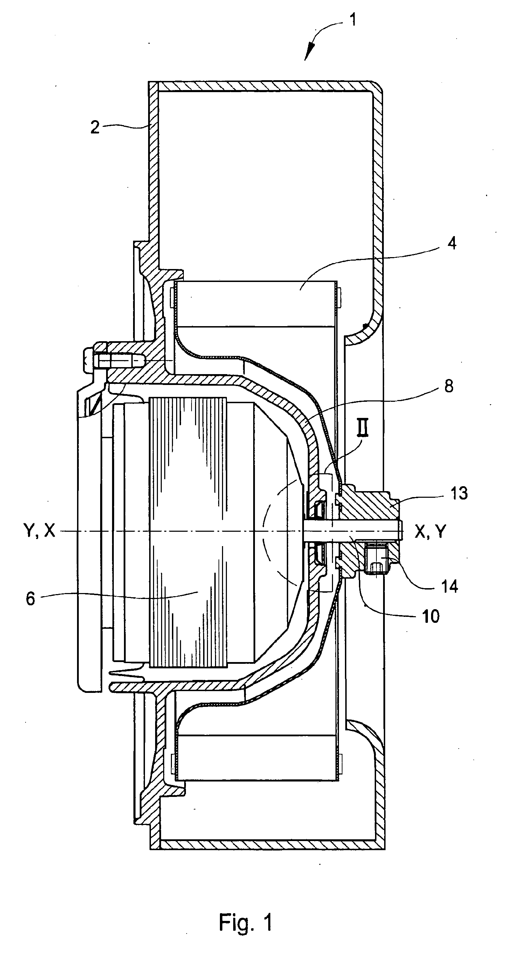

Ein Gebläse 1, insbesondere Radialgebläse, besteht, siehe Fig. 1, aus einem Gehäuse 2, einem innerhalb des Gehäuses 2 drehbar angeordneten Gebläserads 4 und einem außerhalb des Gehäuses 2 angeordneten elektrischen Antriebsmotor 6. Das Gehäuse 2, das beispielsweise als Spiralgehäuse ausgebildet sein kann, weist eine Umfangswandung, eine vordere Stirnwand und eine hintere Wandung 8 auf. Eine Welle 10 des außerhalb des Gehäuses 2 auf der Seite der hinteren Wandung 8, d. h. auf der einer Einlassöffnung des Gebläses 1 abgekehrten Seite, angeordneten Motors 6 erstreckt sich durch eine Durchführöffnung 12 der hinteren Wandung 8 hindurch in das Gehäuse 2 hinein und ist hier über eine Nabe 13 mit dem Gebläserad 4 drehfest verbunden, beispielsweise lösbar über eine Nabenschraube 14 der Nabe 13.

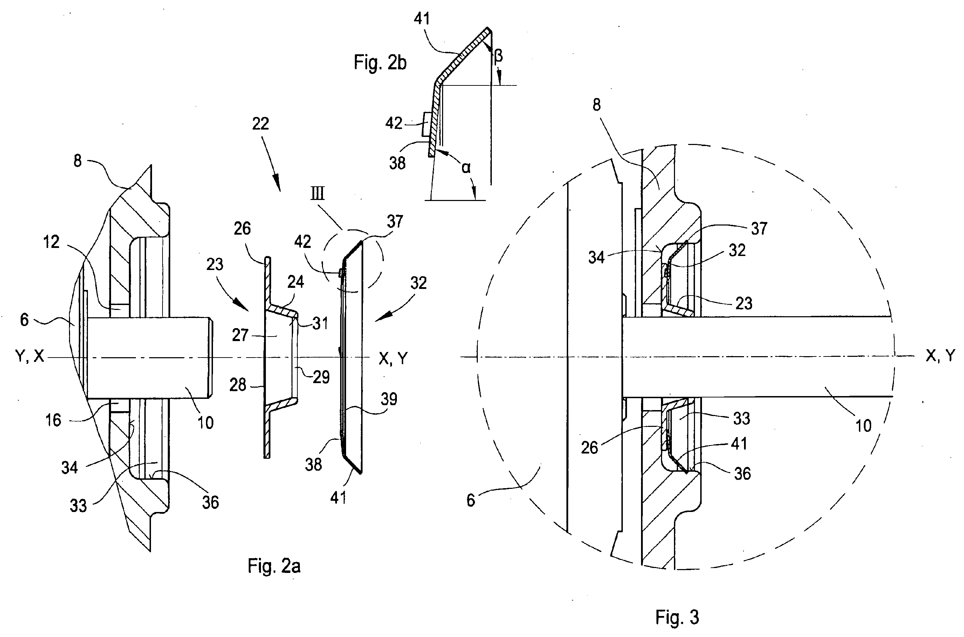

Die insbesondere kreisförmige Durchführöffnung 12, siehe Fig. 2a, besitzt einen größeren Durchmesser bzw. eine größere lichte Weite als der Durchmesser der Welle 10, so dass zwischen der Welle 10 und der Durchführöffnung 12 ein umfänglicher, insbesondere ringförmiger Öffnungsspalt 16 ausgebildet ist.

Wie insbesondere den Fig. 2a und 3 zu entnehmen ist, ist im Bereich der Durchführöffnung 12 der hinteren Wandung 8 eine erfindungsgemäße Dichtung 22 angeordnet, welche derart ausgebildet ist, dass der zwischen der Durchführöffnung 12 und der Welle 10 gebildete Öffnungsspalt 16 verschlossen bzw. abgedichtet ist.

Der Aufbau der erfindungsgemäßen Dichtung 22 ist in Fig. 2a im Einzelnen dargestellt. Hierbei stellt Fig. 2a die erfindungsgemäße Dichtung 22 vor der Montage auf der Welle 10 dar.

Eine erfindungsgemäße Dichtung 22 besteht aus einem Dichtelement 23 aus nicht elastomerem Material. Insbesondere ist als Material für das Dichtelement 23 Polytetrafluorethylen geeignet, das hitzebeständig ist. Somit handelt es sich um ein nicht flexibles Dichtelement 23. Das Dichtelement 23 ist im Wesentlichen flanschförmig ausgebildet. Es besitzt einen mittleren Konuskörper 24. An diesem Konuskörper 24 ist einendig ein Anlagebund 26 angeformt. Der Konuskörper 24 besitzt eine innere Durchgangsöffnung 27, deren Eintrittsöffnung 28 einen größeren Durchmesser aufweist, als dessen Austrittsöffnung 29. Somit verengt sich die Durchgangsöffnung 27 konisch von der Eintrittsöffnung 28 zur Austrittsöffnung 29. Die Eintrittsöffnung 28 und die Austrittsöffnung 29 sind in ihrer lichten Weite bzw. in ihrem Durchmesser derart an den Durchmesser der Welle 10 angepasst, dass der Durchmesser der Eintrittsöffnung 28 größer als der Durchmesser der Welle 10 ist und der Durchmesser der Austrittsöffnung 29 etwa gleich groß ist wie der Durchmesser der Welle 10. Im Bereich der Austrittsöffnung 29 weist der Konuskörper 24 an seinem inneren Wandbereich eine kreiszylindrische Dichtfläche 31 auf. Im Bereich dieser Dichtfläche 31 erfolgt eine umfangsgemäße Abdichtung der Welle 10 mittels des Dichtelements 23, wenn dieses auf die Welle 10 aufgeschoben ist, wie dies in Fig. 1, Fig. 3 und Fig. 5 zu erkennen ist. Durch die Ausbildung der inneren konischen Durchgangsöffnung 27 ist ein leichtes Aufschieben des Dichtelements 23 auf die Welle 10 möglich und zudem können gewisse Schrägstellungen der Welle 10 hierdurch ausgeglichen werden. Im aufgeschobenen Zustand des Dichtelements 23 liegt dieses mit seinem Anlagebund 26 an der hinteren Wandung 8 des Gehäuses 2 an. Der Durchmesser der Welle 10 und der Innendurchmesser der Durchgangsöffnung 27 im Bereich der Dichtfläche 31 sind derart aufeinander abgestimmt, dass im aufgeschobenen Zustand des Dichtelementes 23 auf der Welle 10 eine Umfangsdichtung zwischen beiden Teilen stets gewährleistet ist.

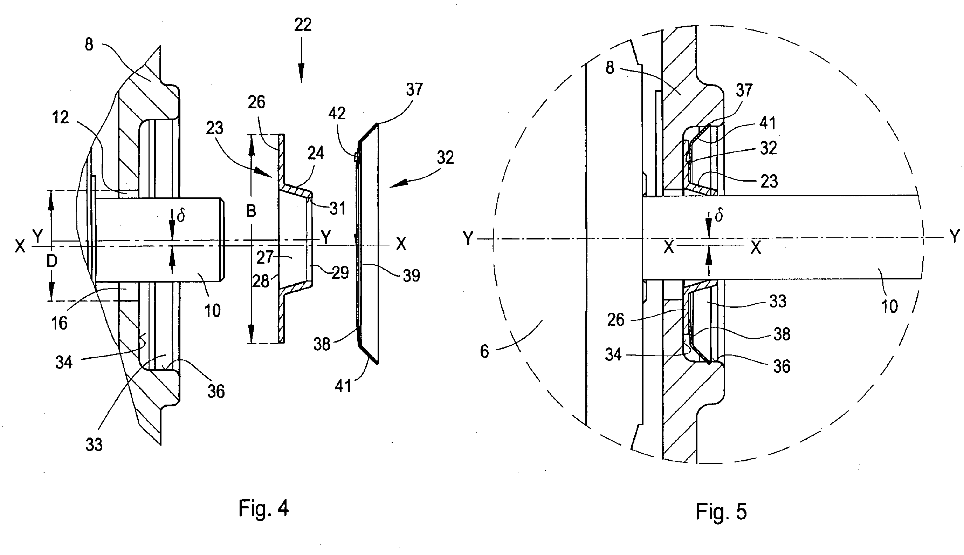

Der Anlagebund 26 liegt in der Öffnungsebene der Eintrittsöffnung 28 und wird, siehe Fig. 2a, 3, mittels eines Spannelementes 32, das ebenfalls Bestandteil der erfindungsgemäßen Dichtung 22 ist, innerhalb einer Wandungsaufnahme 33, die konzentrisch zur Durchführöffnung 12 in der Wandung 8 ausgebildet ist, zumindest kraftschlüssig fixiert. Hierbei übt das in die Wandungsaufnahme 33 der Wandung 8 eingesetzte Spannelement 32 gleichzeitig auch eine axiale Kraft auf das Dichtelement 23 aus, so dass dieses unter elastischer Vorspannung fixiert ist. Die Wandungsaufnahme 33 besitzt einen vorzugsweise kreisförmigen Aufnahmegrund 34 und einen Umfangswandbereich 36, wobei der insbesondere unbearbeitet sein kann. Das Spannelement 32 ist derart dimensioniert, dass es im montierten Zustand mit seinem Umfangsrand 37 im Bereich des Umfangswandbereiches 36 der Wandungsaufnahme 33 kraft- oder kraftformschlüssig verbunden ist. Das Spannelement 32 ist hierzu vorteilhafterweise tellerfederartig ausgebildet und besteht aus federelastischem Material, insbesondere aus Federstahl. Das Spannelement 32 besitzt einen inneren Ringbereich 38 mit einer Durchtrittsöffnung 39, deren Durchmesser größer ist als der Durchmesser der Durchführöffnung 12 der Wandung 8 und kleiner ist als der Außendurchmesser des Anlagebundes 26 des Dichtelementes 23. Weiterhin weist das Spannelement 32 einen äußeren, sich an den inneren Ringbereich 38 anschließenden äußeren Ringabschnitt 41 auf. Der innere Ringbereich 38 verläuft im nicht montierten Zustand des Spannelementes 32 (wie in Fig. 2b dargestellt) unter einem spitzen Winkel α schräg zur Mittelachse X-X des Spannelementes 32 und der äußere Ringabschnitt 41 ist derart geneigt ausgebildet, dass er zu einer mit der Mittelachse X-X parallel verlaufenden Linie einen spitzen Winkel β einschließt, der flacher, d. h. kleiner ist als der Winkel α des inneren Ringbereichs 38. Durch diese Ausbildung des Spannelementes 32 wird die Tellerfederfunktion gewährleistet und in dem Zustand, wenn das Spannelement 32 in die Wandungsaufnahme 33 eingedrückt ist, siehe Fig. 3, 5, verkrallt sich der Umfangsrand 37 des äußeren Ringabschnitts 41 in den Umfangswandbereich 36 der Wandungsaufnahme 33, so dass eine kraftformschlüssige Verbindung zwischen diesen beiden Teilen entsteht, die dadurch begünstigt wird, dass der Umfangswandbereich 36 unbearbeitet ist. Durch das Eindrücken des Spannelementes 32 in die Wandungsaufnahme 33 gegen den Anlagebund 26 des Dichtelementes 23, das auf die Welle 10 aufgeschoben ist, erfolgt eine axiale Verbiegung des inneren Ringbereiches 38, so dass gegen das Dichtelement 23 eine axiale Kraft ausgeübt wird und somit dieses Dichtelement 23 im Bereich des Anlagebundes 26 unter einer Vorspannung steht und gegen die Wandung 8 gepresst wird, wie dies in Fig. 3 dargestellt ist.

Die Montage der erfindungsgemäßen Dichtung 22 erfolgt, nachdem zunächst der Antriebsmotor 6 befestigt worden ist und die Welle 10 somit durch die Durchführöffnung 12 hindurch verläuft und aus dieser hervorragt. Auf die Welle 10 wird zuerst das Dichtelement 23 soweit aufgeschoben, bis der Anlagebund 26 an dem Aufnahmegrund 34 anliegt. In Fig. 2a verläuft die Welle 10 mittig durch die Durchführöffnung 12, wobei das Dichtelement 23 zur Welle 10 zentriert montiert ist und der Anlagebund 26 ebenfalls zentrisch zur Mittelachse X-X der Durchführöffnung 12 angeordnet ist.

Für den Fall, dass die Längsachse Y-Y der Welle 10, wie in Fig. 4 und Fig. 5 gezeigt, nicht mit der Mittelachse X-X der Durchführöffnung 12 zusammenfällt, sondern um einen Versatz δ versetzt ist, ist auch das auf der Welle 10 aufgeschobene Dichtelement 23 um diesen Versatz δ gegenüber der Durchführöffnung 12 versetzt. Da aber der Anlagebund 26 einen Außendurchmesser bzw. eine Gesamtbreite B besitzt, der bzw. die größer ist als die Summe aus dem Durchmesser D der Durchführöffnung 12 und dem zweifachen, maximal möglichen Versatz $\delta_{max}$ entsprechend

$$B > D + 2x \ \delta_{max}$$

ist gewährleistet, dass der Anlagebund 26 in jeder möglichen Montagestellung der Welle 10 an dem Aufnahmegrund 34 anliegen kann.

Nach der Montage des Dichtelementes 23 wird das Spannelement 32 auf die Welle 10 aufgeschoben und in die Wandungsaufnahme 33 eingedrückt, bis das Spannelement 32 mit seinem inneren Ringbereich 38 unter axialer Verformung desselben an dem Anlagebund 26 anliegt, so dass eine axiale Vorspannung erzeugt wird, mit der der Anlagebund 26 zwischen der Wand 8 und dem Spannelement 32 eingespannt wird. Im eingedrückten Zustand des Spannelementes 32 verkrallt sich dessen äußerer Ringabschnitt 41 mit dem Umfangsrand 37 in dem Umfangsrandbereich 36 der Wandungsaufnahme 33, wobei der äußere Ringabschnitt 41 durch die beim Eindrücken erfolgte radiale Verbiegung im eingedrückten Zustand unter einer radialen Vorspannung steht. Somit ist im montierten Zustand des Spannelementes 32 das Dichtelement 23 innerhalb der Wandungsaufnahme 33 fixiert und die Welle 10 ist demgemäß innerhalb des Dichtelementes 23 drehbar und somit "schwimmend" geführt. Zur besseren Verbindung des Spannelementes 32 mit dem Dichtelement 23 kann das Spannelement 32 im Bereich seines inneren Ringsbereichs dem Dichtelement 23 zugekehrt ausgestanzte und gebogene Zungen 42 aufweisen, mit denen ein Formschluss mit dem Dichtelement 23 im eingedrückten Zustand des Spannelementes 32 erzeugt wird, siehe Fig. 2b.

Vorteilhafterweise besitzen das Dichtelement 23 sowie das Spannelement 32 eine kreisförmige Umfangskontur, und zwar in Anpassung an die Form der Wandungsaufnahme 33 sowie der Durchführöffnung 12. Jedoch es liegt ebenfalls im Rahmen der Erfindung, andere Umfangskonturen dieser vorstehenden Elemente vorzusehen.

Die vorliegende Erfindung ist nicht auf das gezeigte Ausführungsbeispiel beschränkt, sondern umfasst alle im Sinne der Erfindung gleichwirkende Mittel.

Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

**Patentansprüche**

1. Dichtung zum Abdichten eines zwischen einer Welle (10) und einer von dieser durchlaufenen Durchführöffnung (12) einer Wandung (8) bestehenden umfänglichen Öffnungsspaltes (16), mit einem Dichtelement (23) aus nicht elastomerem Material und einem Spannelement (32) zum kraftschlüssigen Fixieren des Dichtelements (23) zwischen dem Spannelement (32) und der Wandung (8), wobei das Dichtelement (23) eine Durchgangsöffnung (27) und das Spannelement (32) eine Durchtrittsöffnung (39) für die Welle (10) besitzen, **dadurch gekennzeichnet, dass** das Spannelement (32) aus einem inneren Ringbereich (38) mit der Durchtrittsöffnung (39) besteht, der unter einem spitzen Winkel (α) schräg zur Mittelachse (X-X) der Durchtrittsöffnung (39) verläuft sowie aus einem äußeren Ringabschnitt (41), der gegenüber dem inneren Ringbereich (38) abgewinkelt ist und mit einer zur Mittelachse (X-X) parallel verlaufenden Linie einen spitzen Winkel (β) einschließt, der kleiner ist als der Winkel (α) und das Dichtelement (23) flanschförmig ausgebildet ist und einen mittleren Konuskörper (24) aufweist, mit der sich konisch verengenden Durchgangsöffnung (27), die eine Eintrittsöffnung (28) und eine Austrittsöffnung (29) aufweist, wobei die Eintrittsöffnung (28) einen Durchmesser besitzt, der größer als der Durchmesser der Welle (10) ist und die Austrittsöffnung (29) einen Durchmesser aufweist, der dem Durchmesser der Welle (10) entspricht, wobei zwischen der Welle (10) und dem Dichtelement (23) im Bereich der Austrittsöffnung (29) eine Umfangsdichtung ausgebildet ist.

2. Dichtung nach Anspruch 1,
   **dadurch gekennzeichnet, dass** das Spannelement (32) derart dimensioniert ist, dass es im montierten Zustand mit der Wandung (8) kraftformschlüssig verbindbar ist.

3. Dichtung nach Anspruch 1 oder 2,
   **dadurch gekennzeichnet, dass** dasSpannelement(32) tellerfederartig ausgebildet ist und aus federelastischem Material, insbesondere Federstahl besteht.

4. Dichtung nach einem der Ansprüche 1 bis 3,
   **dadurch gekennzeichnet, dass** der Konuskörper (24) des Dichtelementes (23) im Bereich der Umfangsdichtung zur Welle (10) eine innere kreiszylindrische Dichtfläche (31) aufweist.

5. Dichtung nach einem der Ansprüche 1 bis 4,
   **dadurch gekennzeichnet, dass** das Dichtelement (23) einen Anlagebund (26) aufweist, der in der Öffnungsebene der Eintrittsöffnung liegt und sich von deren Umfangsrand radial nach außen erstreckt und derart bemessen ist, dass im montierten Zustand eine dichtende Anlage an der Wandung (8) im Bereich um die Durchführöffnung (12) herum gewährleistet ist.

6. Dichtung nach Anspruch 5,
   **dadurch gekennzeichnet, dass** der Anlagebund (26) des Dichtelements (23) einen Außendurchmesser bzw. eine Gesamtbreite (B) besitzt, der bzw. die größer ist als die Summe aus dem Durchmesser (D) der Durchführöffnung (12) und einem zweifachen, maximal möglichen Versatz ($\delta_{max}$) der Welle (8) zur Mittelachse (X-X) in der Durchführöffnung (12), d. h.

$$B > D + 2x\, \delta_{max}.$$

7. Dichtung nach einem der Ansprüche 1 bis 6,
   **dadurch gekennzeichnet, dass** die Öffnungsweite der Durchtrittsöffnung (39) des Spannelementes (32) derart bemessen ist, dass im montierten Zustand des Spannelementes (32) der Anlagebund (26) des Dichtelementes (23) zwischen dem Spannelement (32) im Bereich dessen inneren Ringbereichs (38) und der Wandung (8) fixiert ist.

8. Dichtung nach einem der Ansprüche 1 bis 7,
   **dadurch gekennzeichnet, dass** der innere Ringbereich (38) des Spannelementes (32) derart radial abstehende Zungen (42) besitzt, dass diese im montierten Zustand des Spannelementes (32) einen Formschluss mit dem Dichtelement (23) erzeugen.

9. Dichtung nach einem der Ansprüche 1 bis 8,
   **dadurch gekennzeichnet, dass** das Dichtelement (23) aus Polytetrafluorethylen besteht.

**Claims**

1. A seal for sealing off a peripheral opening gap (16) existing between a shaft (10) and a lead-through opening (12), through which said shaft passes, in a wall (8), with a sealing element (23) made from non-elastomeric material and a clamping element (32) for force-locked fixing of the sealing element (23) between the clamping element (32) and the wall (8), the sealing element (23) having a through opening (27) and the clamping element (32) having a passage opening (39) for the shaft (10), **characterised in that** the clamping element (32) consists of an inner ring region (38) with the passage opening (39), which runs at an acute angle ($\alpha$) obliquely to the centre line (X-X) of the passage opening (39), and also of an outer ring section (41) which is angled relative to the inner ring region (38) and which encloses an acute angle ($\beta$) which is smaller than the angle ($\alpha$) with a line extending parallel to the centre line (X-X), and the sealing element (23) is in the form of a flange and has a central cone body (24), with the conically tapering through opening (27), which has an entry opening (28) and an exit opening (29), the entry opening (28) having a diameter which is greater than the diameter of the shaft (10) and the exit opening (29) having a diameter which corresponds to the diameter of the shaft (10), with a peripheral seal being formed between the shaft (10) and the sealing element (23) in the region of the exit opening (29).

2. A seal according to Claim 1, **characterised in that** the clamping element (32) is of such dimensions that in the mounted state it can be connected in force-locked and form-locked manner to the wall (8).

3. A seal according to Claim 1 or 2, **characterised in that** the clamping element (32) is formed in the manner of a plate spring and consists of resilient material, in particular spring steel.

4. A seal according to one of Claims 1 to 3, **characterised in that** the cone body (24) of the sealing element (23) has an inner circular-cylindrical sealing face (31) in the region of the peripheral seal to the shaft (10).

**5.** A seal according to one of Claims 1 to 4, **characterised in that** the sealing element (23) has a contact collar (26) which lies in the opening plane of the entry opening and extends radially outwards from the peripheral edge thereof and is of dimensions such that in the mounted state a sealing contact on the wall (8) in the region around the lead-through opening (12) is guaranteed.

**6.** A seal according to Claim 5, **characterised in that** the contact collar (26) of the sealing element (23) has an external diameter or an overall width (B) which is greater than the total of the diameter (D) of the lead-through opening (12) and a double, maximum possible offset ($\delta_{max}$) of the shaft (8) to the centre line (X-X) in the lead-through opening (12), i.e.

$$B > D + 2 \times \delta_{max}.$$

**7.** A seal according to one of Claims 1 to 6, **characterised in that** the opening width of the passage opening (39) of the clamping element (32) is of dimensions such that in the mounted state of the clamping element (32) the contact collar (26) of the sealing element (23) is fixed between the clamping element (32) in the region of the inner ring region (38) thereof and the wall (8).

**8.** A seal according to one of Claims 1 to 7, **characterised in that** the inner ring region (38) of the clamping element (32) has tongues (42) which project radially such that in the mounted state of the clamping element (32) they produce a form lock with the sealing element (23).

**9.** A seal according to one of Claims 1 to 8, **characterised in that** the sealing element (23) consists of polytetrafluoroethylene.

**Revendications**

**1.** Joint d'étanchéité destiné à assurer l'étanchéité d'une fente (16) circonférentielle formée entre un arbre (10) et un passage (12) traversé par celui-ci dans une paroi (8), comportant un élément d'étanchéité (23) en matériau non élastomère et un élément de serrage (32) pour la fixation par application de force de l'élément d'étanchéité (23) entre l'élément de serrage (32) et la paroi (8), ledit élément d'étanchéité (23) étant muni d'un passage (27) pour l'arbre (10) et l'élément de serrage (32) étant muni d'un passage (39) pour ledit arbre, **caractérisé en ce que** l'élément de serrage (32) est formé par une zone annulaire intérieure (38) munie du passage (39), laquelle s'étend en formant un angle aigu ($\alpha$) en oblique par rapport à l'axe médian (X-X) du passage (39), ainsi qu'une zone annulaire extérieure (41), qui est coudée par rapport à la zone annulaire intérieure (38) et forme, avec une ligne parallèle à l'axe médian (X-X), un angle aigu ($\beta$) qui est inférieur à l'angle ($\alpha$), et l'élément d'étanchéité (23) est réalisé en forme de collet et comporte un corps conique (24) central muni du passage (27) se rétrécissant en forme de cône, qui comporte une ouverture d'entrée (28) et une ouverture de sortie (29), ladite ouverture d'entrée (28) ayant un diamètre supérieur au diamètre de l'arbre (10), et ladite ouverture de sortie (29) ayant un diamètre correspondant au diamètre de l'arbre (10), un système étanche périphérique étant formé entre l'arbre (10) et l'élément d'étanchéité (23) dans la zone de l'ouverture de sortie (29).

**2.** Joint d'étanchéité selon la revendication 1, **caractérisé en ce que** l'élément de serrage (32) est dimensionné de telle sorte que, à l'état monté, il peut être relié par application de force et conjugaison de forme avec la paroi (8).

**3.** Joint d'étanchéité selon la revendication 1 ou 2, **caractérisé en ce que** l'élément de serrage (32) est configuré en forme de coupelle et est réalisé dans un matériau élastique flexible, en particulier un acier à ressort.

**4.** Joint d'étanchéité selon l'une quelconque des revendications 1 à 3, **caractérisé en ce que** le corps conique (24) de l'élément d'étanchéité (23) comporte une surface d'étanchéité (31) intérieure, cylindrique circulaire, dans la zone du système étanche par rapport à l'arbre (10).

**5.** Joint d'étanchéité selon l'une quelconque des revendications 1 à 4, **caractérisé en ce que** l'élément d'étanchéité (23) comporte un collet d'appui (26), qui est situé dans le plan de l'ouverture d'entrée et qui s'étend radialement vers l'extérieur depuis le bord périphérique de cette dernière et qui est dimensionné de telle sorte que, à l'état monté, un appui étanche contre la paroi (8) dans la zone tout autour du passage (12) est assuré.

**6.** Joint d'étanchéité selon la revendication 5, **caractérisé en ce que** le collet d'appui (26) de l'élément d'étanchéité (23) a un diamètre extérieur ou une largeur totale (B) qui est supérieur(e) à la somme formée par le diamètre (D) du passage (12) et un double décalage ($\delta_{max}$) possible au maximum, de l'arbre (8) par rapport à l'axe médian (X-X) dans le passage (12), c'est-à-dire

$$B > D + 2 \times \delta_{max}.$$

7. Joint d'étanchéité selon l'une quelconque des revendications 1 à 6, **caractérisé en ce que** la largeur d'ouverture du passage (39) de l'élément de serrage (32) est dimensionnée de telle sorte que, à l'état monté de l'élément de serrage (32), le collet d'appui (26) de l'élément d'étanchéité (23) est fixé entre l'élément de serrage (32), dans la zone de la zone annulaire intérieure (38) de celui-ci, et la paroi (8).

8. Joint d'étanchéité selon l'une quelconque des revendications 1 à 7, **caractérisé en ce que** la zone annulaire intérieure (38) de l'élément de serrage (32) comporte des pattes (42) en saillie radiale, de telle sorte que celles-ci, à l'état monté de l'élément de serrage (32), génèrent un assemblage par conjugaison de forme avec l'élément d'étanchéité (23).

9. Joint d'étanchéité selon l'une quelconque des revendications 1 à 8, **caractérisé en ce que** l'élément d'étanchéité (23) est réalisé en polytétrafluoréthylène.

Fig. 1

Fig. 3

Fig. 2b

Fig. 2a

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE G9111745
- US 4739998 A
- US 3492010 A
- CA 2249916
- WO 96102777 A
- US 2264413 A